# EUROPEAN PATENT SPECIFICATION

(11) **EP 3 409 539 B1**
(45) Date of publication and mention of the grant of the patent: **09.10.2019**
(21) Application number: 17174383.4
(22) Date of filing: 02.06.2017
(51) Int. Cl.: B60R 9/048

(54) **LOAD CARRIER**
LASTENTRÄGER
SUPPORT DE CHARGE

(43) Date of publication of application: 05.12.2018
(73) Proprietor: Thule Sweden AB, 335 04 Hillerstorp (SE)
(72) Inventor: FERMAN, Magnus, 33154 Värnamo (SE)
(74) Representative: Wallentin, Lars

(56) References cited:
- WO-A1-2014/018283
- US-A- 5 553 760
- US-A1- 2008 149 675
- US-A1- 2016 137 139

## Description

### TECHNICAL FIELD

The technical field relates to a load carrier for a vehicle, in particular to a load carrier mountable on the roof of a vehicle, for example a load carrier basket.

### BACKGROUND

Load carriers, in particular load carriers which can be mounted on the roof of a vehicle are known in the art. Such load carriers typically comprise crossbars which are mounted to the vehicle by means of connecting feet and which are able to support goods to be transported.

While using crossbars for supporting goods to be transported is a very simple way for transporting goods, such a configuration has the drawback that the goods to be transported are often difficult to secure in the longitudinal direction. For example, goods to be transported are often placed on the crossbars of known load carrier and are secured to the crossbars by means of straps. It is very often the case that such a fixation does not prevent a movement of the goods in the longitudinal direction of the vehicle in case of an abrupt deceleration of the vehicle, for instance due to a head-on crash. Furthermore, the exact positioning of goods to be transported, in particular lengthy goods, is often a cumbersome task as such goods have to be precisely arranged on the load carrier. US 2016/0137139 A1 discloses a ladder rack for transporting a ladder on a work van.

Accordingly, it is desirable to at least address the foregoing. In addition, other desirable features and characteristics will become apparent from the subsequent summary and detailed description, and the appended claims, taken in conjunction with the accompanying drawings and this background.

### SUMMARY

It is the object of the invention to provide an enhanced load carrier which at least reduces the above-mentioned drawbacks.

Described in a first embodiment is a load carrier for a vehicle. The load carrier may be a load carrier basket. According to the embodiment, the load carrier comprises at least one crossbar which in a mounted state of the load carrier extends in cross direction of the vehicle. Preferably, the load carrier comprises two or more, e.g. six crossbars. The crossbars may be arranged on the same level meaning that their upper ends may be arranged in the same plane.

Furthermore, the load carrier comprises a load stop wherein the load stop is provided on a front end of the load carrier in the longitudinal direction of the load carrier. The load stop acts as a stop element which is arranged to stop a movement of goods to be transported, for instance a movement of the goods during a loading process or a movement resulting from an abrupt deceleration of the vehicle. In other words, a load stop in the context of the present disclosure can be considered as a barrier.

The load stop comprises at least one supporting portion for coupling the load stop to the load carrier and a stop member with an abutment portion. In the present embodiment, the load stop is coupled to the load carrier by means of the supporting portion. The supporting portion may be realized in the form of at least one connecting arm which couples the load stop to at least the crossbar which is located next to the load stop.

Preferably, the supporting portion, e.g. a supporting bar extending in the longitudinal direction of the load carrier and in the longitudinal direction of the vehicle when the load carrier is mounted on the vehicle, is coupled to at least one crossbar, preferably two different crossbars in order to fixedly arrange the load stop on the load carrier provided that multiple crossbars are used in the arrangement. For fixation purposes, the supporting portion may be arranged with suitable fixation sections, e.g. fixation bores. However, it is also possible to fix the supporting portion to the crossbars by means of a fixation bracket or clamp. It is also possible that the load carrier comprises side walls which are arranged in the longitudinal direction of the load carrier and are preferably coupled to end portions of the crossbars. If the load carrier comprises such side walls, the supporting portion may also be coupled to the side walls of the load carrier. The load stop may thus act as a front stop limiting a loading area in the front area of the load carrier.

The stop member is held on the at least one supporting portion by means of a coupling mechanism in such a manner that the stop member is movable between a use position in which the abutment portion is provided such that goods to be transported on the load carrier can get in contact with the abutment portion, and a non-use position in which the goods to be transported cannot get in contact with the abutment portion.

Thus, in the non-use position, the stop member does not provide a stop function. However, it is noted that the terms non-use position and use position in the context of the present disclosure relate to the abutment feature only meaning that the stop member can have another function or can be used in a different way which is not related to the abutment function when it is in the non-use position. For example, the stop member may have a supporting function which is available when the stop member is arranged in the non-use position although it is not used as a stop member.

In one embodiment, the abutment portion may comprise an abutment surface, preferably a flat surface, which is oriented substantially perpendicular to and in cross direction of the load carrier when the stop member is in the use position. For example, the abutment portion may be oriented substantially perpendicular to a supporting plane which is limited by the upper ends of the crossbars. In a state where the load carrier is mounted on a vehicle, the abutment surface may extend substantially vertically.

According to another embodiment the abutment surface preferably has a height of 50 to 150mm, preferably 75 to 100mm, most preferably 85 mm. With such dimensions, an abutment surface is available which provides a reliable abutment area.

According to a further embodiment, the stop member comprises an aerodynamically formed portion which is configured such that the air resistance of the stop member is reduced in the use position and the non-use position. Thus, an aerodynamically enhanced portion is provided which is active in both positions.

According to an embodiment, the aerodynamically formed portion comprises a first area and a second area. The areas may be arranged such that only one of them is active when the stop member is in the non-use position. In the context of the present application, active means that head wind occurring during vehicle travel may act on the area whereas inactive means that head wind cannot act on the area. In a preferable configuration, both areas comprise flat surfaces which are arranged at an angle with respect to each other, preferably at an angle of 45°.

According to a further embodiment, the stop member is configured and arranged such that the aerodynamically formed portion does not protrude into a loading area of the load carrier.

According to a further embodiment, the coupling mechanism is configured to pivotably support the stop member, wherein preferably a pivot axis about which the stop member is pivotable is provided substantially perpendicular to a longitudinal extension direction of the supporting portion. In the condition in which the load carrier is mounted on a vehicle, the longitudinal extension direction of the supporting portion is preferably in the longitudinal direction of the vehicle. Thus, the pivot axis may be provided substantially parallel to the crossbars of the load carrier.

According to a further embodiment, the coupling mechanism comprises a restriction member which is configured to limit a pivoting movement of the stop member between the use position and the non-use position. The restriction member can be generally any member which may act as a stop. Such a restriction member may be an elongate element extending substantially parallel to the crossbars of the load carrier and, for example parallel to a pivot axis of the stop member. For instance, the restriction member may be a hollow bar having a substantially square cross-section.

According to a further embodiment, the stop member comprises a first contact portion and a second contact portion wherein the restriction member is arranged such that the first contact portion is in contact with the restriction member when the stop member is in the non-use position and that the second contact portion is in contact with the restriction member when the stop member is in the use position. Accordingly, the movement of the stop member is restricted by a contact with the restriction member in both directions. This allows for a reproducible positioning of the stop member in the use position and the non-use position.

According to a further embodiment, the abutment portion is configured to receive a load which can be applied onto the stop member by means of the goods to be transported, for example an impact load which can be applied on the stop member in particular when loading the load carrier or as a result of a movement of the goods to be transported due to a deceleration of the vehicle.

According to a further embodiment, the stop member is formed from extruded aluminum and comprises a reinforcement structure, for example a reinforcement wall which extends from the abutment portion in a substantially perpendicular direction thereto.

According to another embodiment, the coupling mechanism comprises a locking mechanism which is able to lock the stop member in the use position and/or the non-use position and which preferably allows a tool-free transition of the stop member from the use position to the non-use position. Thus, the locking mechanism can be configured to releasably lock the stop member in the use position, for instance. This provides a configuration in which the stop member is securely held in the desired position. For example, the locking mechanism can be configured such that the stop member at least withstands forces resulting from air resistance and acting on the stop member so that an undesirable transition from the use position to the non-use position or vice versa is prevented.

According to a further embodiment, the locking mechanism comprises a locking portion which is fixed to the stop member or integrally formed with the stop member, and an urging member which is configured such that it applies a force on the locking portion in such a manner that the stop member is urged towards the use position or the non-use position. Accordingly, a force is applied on the locking portion which urges the stop member in a desired direction.

According to a further embodiment, the urging member is provided on the supporting portion and comprises an elastic portion, preferably made of sheet metal, which is continuously in contact with the locking portion wherein the locking portion and the elastic portion are arranged such that the elastic portion is deformed upon movement of the stop member from the use position to the non-use position by means of the urging member in such a manner that the force applied from the urging member onto the locking portion first rises to a maximum value and then decreases.

According to a further embodiment, the position of the load stop with respect to the crossbar is adjustable in the longitudinal direction of the load carrier, for example from 0 up to and including 500 mm.

According to a further embodiment, the supporting portion is a supporting bar extending in the longitudinal direction of the load carrier, which is configured such that it can be fixed to the at least one crossbar at different positions, preferably equidistant positions, wherein the supporting bar preferably comprises equidistant openings in which a fixation bolt for fixation to the crossbar can be inserted, or wherein the supporting portion is a side wall preferably at least partially limiting a loading area of the load carrier.

Additional features and advantages may be gleaned by the person skilled in the art from the following description of exemplary embodiments, which are not to be construed as limiting, however, drawing reference to the attached drawings.

### BRIEF DESCRIPTION OF THE DRAWINGS

The present invention will hereinafter be described in conjunction with the following drawing figures, wherein like numerals denote like elements, and:
Fig. 1 shows a perspective view of the load carrier according to an embodiment.
Fig. 2 shows a plan view of the load carrier shown in Fig. 1.
Figs. 3 and 4 show sectional side views of a front portion of the load carrier as shown in Figs. 1 and 2.
Figs. 5 to 7 show perspective views of the front portion of the load carrier wherein a stop member of the load carrier is shown in different positions.
Figures 8 and 9 show plan views of front portions of a load carrier according to a further embodiment.

All figures are only schematic depictions of exemplary embodiments in which, in particular, distances and dimensional correlations are not presented to scale.

### DETAILED DESCRIPTION

The following detailed description is merely exemplary in nature and is not intended to limit application and uses. Furthermore, there is no intention to be bound by any theory presented in the preceding background or summary or the following detailed description.

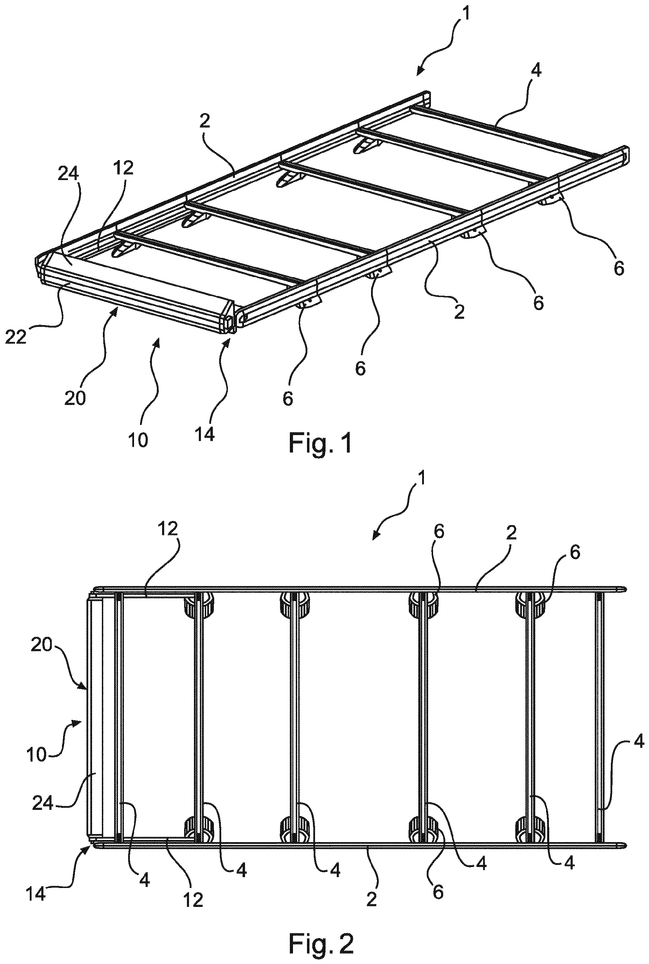

Fig. 1 shows a schematic perspective view of the load carrier 1 according to an embodiment and Fig. 2 shows a plan view of the load carrier 1 according to the embodiment. The load carrier 1 comprises several crossbars 4, more precisely six crossbars 4 which are arranged parallel with respect to each other and are partially configured to be coupled to the roof of a vehicle (not shown) by means of load carrier feet 6. It is noted, that other coupling means can be used for coupling the load carrier 1 to the vehicle instead of using load carrier feet 6. The load carrier 1 further comprises optional sidebars 2 which extend substantially parallel with respect to each other. In the present embodiment, the sidebars 2 are coupled to the longitudinal ends of the crossbars 4 and couple the crossbars 4 to each other. The overall configuration of the load carrier 1 is such that the sidebars 2 extend in the longitudinal direction of the vehicle when the load carrier 1 is mounted on the roof of the vehicle and the crossbars 4 extend in the cross direction of the vehicle and the horizontal direction when the load carrier 1 is mounted on the roof of the vehicle.

The crossbars 4 are configured such that their upper ends or upper end portions are arranged on substantially the same height thereby providing a loading plane which in the present embodiment extends substantially horizontally when the load carrier 1 is mounted on the roof of the vehicle. The sidebars 2 are configured and arranged on the crossbars 4 such that a portion of the same protrudes beyond the upper ends of the crossbars 4 in such a manner that a loading area is limited by two surfaces of the sidebars 2 facing each other and the loading plane which is spanned by the upper ends of the crossbars 4. The load carrier 1 as shown in Fig. 1 comprises a front portion which is shown on the left side in Fig. 1 and a rear portion which is shown on the right side in Fig. 1. When the load carrier 1 is mounted on the roof of the vehicle the front portion of the load carrier 1 is arranged facing the front side of the vehicle and the rear portion of load carrier 1 is arranged facing the rear side of the vehicle. The overall construction of the basic elements of the load carrier 1 as described above is also clearly shown in Fig. 2.

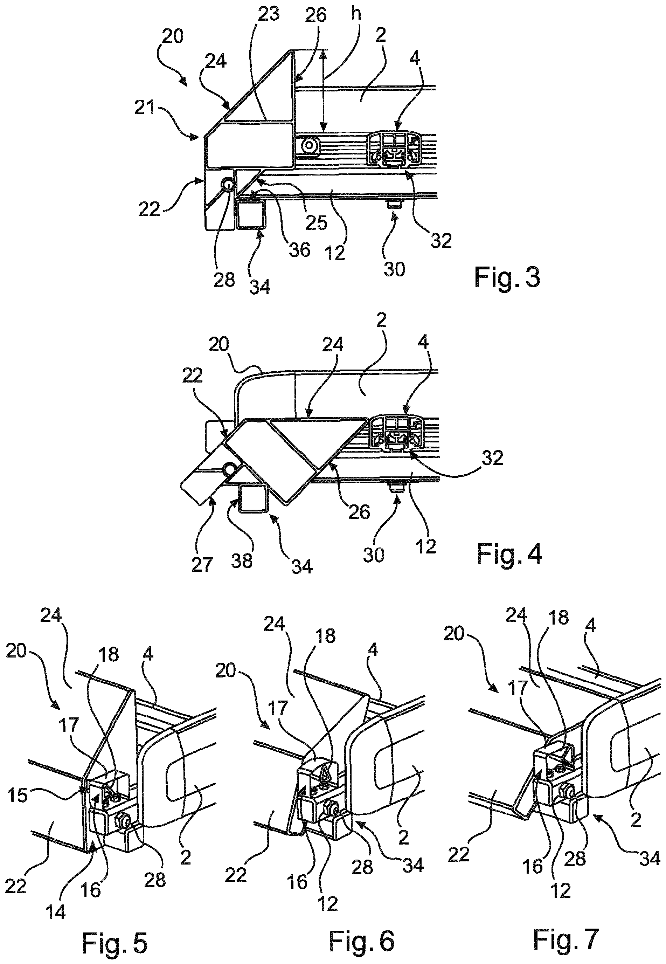

A load stop 10 is arranged at the front portion of the load carrier 1 in the longitudinal direction of the load carrier and, as shown in the drawings, can form a front end of the load carrier 1. The load stop comprises at least one supporting portion 12 for coupling the load stop 10 to the load carrier 1. In the present embodiment, the load stop comprises 2 supporting portions 12 by which it is coupled to the load carrier 1. As is shown in Fig.1, the supporting portions 12 may be arranged at a predetermined distance with respect to each other and are coupled to the adjacent crossbar 4. The load stop 10 further comprises a stop member 20 with an abutment portion 26. The abutment portion 26 is shown in Figs. 3 and 4. As is shown in Fig.1 and Fig. 2, the stop member 20 can be arranged to extend substantially parallel with the adjacent crossbar 4 and can comprise a predetermined length which in the present embodiment as shown Fig. 1 and Fig. 2 substantially corresponds to a width of the load carrier 1, more precisely to a width of a loading area of the load carrier 1.

The stop member 20 is held on the supporting portion 12 by means of a coupling mechanism 14 in such a manner that the stop member 20 is movable between a use position in which the abutment portion 26 is provided such that goods to be transported on the load carrier 1 can get in contact with the abutment portion 26, and a non-use position in which the goods to be transported cannot get in contact with the abutment portion 26. Figs. 3 and 5 show a state in which the stop member 20 is in the use position and Figs. 4 and 7 show a state in which the stop member 20 is in the non-use position. As shown in the figures, while the abutment portion 26 is available for contact with the goods to be transported on the load carrier 1 in the use position where the abutment portion is facing towards the rear of the load carrier 1, the abutment portion 26 is rendered inactive in the non-use position as shown in Fig.4. Accordingly, depending on whether the stop member 20 is needed for transporting goods on the load carrier 1, it is possible to switch the stop member 20 between the above-mentioned states.

Figs. 3 to 7 furthermore disclose that the abutment portion 26 comprises an abutment surface which is embodied as a flat surface in the embodiment. When the stop member 20 is in the use position, the abutment surface is oriented substantially perpendicular to and in cross direction of the load carrier 1. In other words, the abutment surface extends substantially parallel to the adjacent crossbar 4 and is arranged substantially particularly when the load carrier 1 is mounted on a vehicle. More precisely, an abutment plane defined by the flat abutment surface is arranged substantially perpendicular to a supporting plane which is defined by the upper most portions of the crossbar 4.

According to a further embodiment, in the use position, the abutment surface preferably has a height h by which the abutment surface protrudes beyond the above mentioned supporting plane. In other words, when viewing the load carrier from the side, the upper end of the abutment surface is located above the uppermost end of the adjacent crossbar 4 by the above-mentioned height h which in the present embodiment is 50 to 150 mm, preferably 75 to 100 mm and most preferably 85 mm. Using the above-mentioned heights provides an abutment surface which is able to act as a reliable stop.

A further preferable feature according to a further embodiment of the present subject matter is best seen in Figs. 3 to 7 and is embodied in that the stop member 20 comprises an aerodynamically formed portion 21 which is configured such that the air resistance of the stop member 20 is reduced in the use position and the non-use position. In order to achieve such a reduction in air resistance, the aerodynamically formed portion 21 can comprise a first area 22 and a second area 24 wherein both areas 22, 24 preferably comprise flat surfaces which are arranged at an angle with respect to each other. In the present embodiment, the angle is substantially 45°. Furthermore, the first area 22 and the second area 24 are arranged such that an angle of attack of head wind on the first area 22 is substantially 90° whereas an angle of attack of head wind on the second area 24 is substantially 45° when the stop member 20 is in the use position. On the other hand, when the stop member 20 is in the non-use position, the first area 22 is positioned such that an angle of attack of head wind is substantially 45° and the second area 24 is arranged substantially parallel to a head wind direction.

The stop member 20 can be configured and arranged such that the aerodynamically formed portion 21 does not protrude into a loading area of the load carrier 1. The loading area as referred to can be limited by the above-mentioned supporting plane. In a preferable embodiment, the aerodynamically formed portion 21 is provided on the stop member such that it does not protrude beyond the supporting plane when the stop member 20 is in the non-use position. For example, the second area 24 may be a flat surface which is arranged substantially parallel to the supporting plane when the stop member 20 is in the non-use position as shown in Fig. 4. With such a configuration, the second area 24 may be embodied as an additional supporting surface acting in the supporting plane. In other words, also the term non-use position is used here for describing the state in which the abutment portion 26 is rendered inactive, it is to be noted that the term non-use position as used here refers to the function of the abutment portion 26 and does not exclude and other portion of the stop member 20 from being active and having a specific purpose.

As already mentioned above, the stop member 20 is held on the supporting portion 12 by means of a coupling mechanism 14. According to a preferable embodiment, the coupling mechanism 14 comprises a locking mechanism 15 which is able to lock the stop member 20 in the use position and/or the non-use position. Preferably, the coupling mechanism 14 allows a tool free transition of the stop member 20 from the use position to the non-use position. The coupling mechanism 14 is described with reference to Figs. 5 to 7 in the following.

The coupling mechanism 14 according to the embodiment is configured to pivotably support the stop member 20. More precisely, the coupling mechanism 14 provides a mechanism which renders the stop member 20 pivotable about a pivot axis 28 which in the present embodiment is defined by a fixation screw. In the configuration as shown in the figures, the stop member 20 is arranged such that the pivot axis is provided substantially perpendicular to a longitudinal extension direction of the supporting portion 12. In other words, according to the embodiment, the pivot axis is arranged substantially parallel to an extension direction of the crossbar 4 which is adjacent to the stop member 20.

The coupling mechanism 14 comprises an optional restriction member 34 which is configured to limit a pivoting movement of the stop member 20 between the use position and the non-use position. The stop member comprises a first contact portion 25 and a second contact portion 27 wherein the restriction member 34 is arranged such that the first contact portion 25 is in contact with the restriction member 34 when the stop member 20 is in the non-use position and the second contact portion 27 is in contact with the restriction member 34 when the stop member 20 is in the use position. By using the restriction member 34 in combination with the above formed stop member, the stop member is able to receive higher loads compared to other configurations which means that a movement of the stop member can be reliably prevented beyond the use position and the non-use position.

The abutment member 20 according to the present embodiment is configured to receive a load which can be applied onto the stop member 20 by means of the goods to be transported, for example an impact load which can be applied on the stop member 20 in particular when loading the load carrier 1 or as a result of a movement of the goods to be transported due to a deceleration of the vehicle. Furthermore, the stop member 20 according to the embodiment is formed from extruded aluminium and comprises a reinforcement structure in the form of a reinforcement wall 23 which extends from the abutment portion 26 in a substantially perpendicular direction to the extension plane of the abutment portion 26.

As is best shown in Figs. 5 to 7, the coupling mechanism 14 comprises a locking mechanism 15 which is able to lock the stop member 20 in the use position and the non-use position. In an alternative embodiment, it is also possible to realize the coupling mechanism 14 such that it is able to lock the stop member in the use position or the non-use position. In either case, it is preferable that the coupling mechanism allows a tool-free transition of the stop member from the use position to the non-use position as it is the case in the configuration as shown in Figs. 5 to 7.

The locking mechanism 15 comprises a locking portion 18 which in the present embodiment is fixed to the stop member 20. In the alternative, it is also possible to integrally form the locking portion with the stop member. Furthermore, the locking mechanism 15 comprises an urging member 16 which is configured such that it applies a force on the locking portion 18 in such a manner that the stop member 20 is urged towards the use position or the non-use position.

As is shown in Figs. 5 to 7, the urging member is provided on the supporting portion 12 and comprises an elastic portion 17 which according to the embodiment is made of sheet metal. As presented in the figures, the urging member 16 comprises a frame like shape, more precisely a hollow substantially rectangular shape, and is fixed to the supporting portion 12 by means of two nuts. The locking portion 18 protrudes from the stop member in a direction substantially perpendicular to the pivot axis and such that a portion of the same is located inside the urging member. As the locking portion 18 is coupled to the stop member 20, the locking portion 18 is moved on a circular path when the stop member 20 is moved from the use position to the non-use position.

The elastic portion 17 is arranged such that the locking portion 18 contacts the same and pushes the same outward upon movement between the use position and the non-use position with a maximum deformation of the elastic portion 17 in an intermediate position between the use position and the non-use position as is shown in Fig. 6. Thus, in the intermediate position, a maximum restoring force of the elastic portion 17 acts on the locking portion 18 urging the same towards the left or towards the right from the position as shown in Fig. 6. Thus, when the stop member 20 is moved from the use position to the non-use position as illustrated in Figs. 5 to 7, the force applied from the urging member 16 onto the locking portion 18 first rises to a maximum value and then decreases.

In the present embodiment, the locking portion 16 comprises a substantially triangular cross-section and is configured such that a flat surface of the same is in contact with side walls of the urging member 16 when the stop member 20 is in the use position or the non-use position. However, the locking portion 18 may also have a round shape or other cornered shapes as long as the above described effect can be properly achieved.

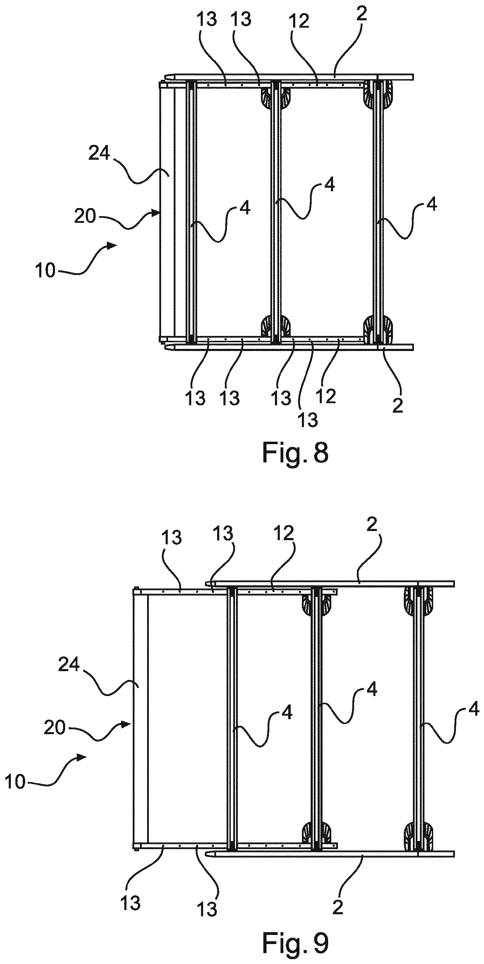

A further embodiment is described with reference to Figs. 8 and 9. According to this embodiment, the load carrier is configured such that the position of the load stop 10 with respect to the adjacent crossbar 4 is adjustable in the longitudinal direction of the load carrier1, for example from 0 up to and including 500 mm. For that purpose, the supporting portion 12 is embodied as a supporting bar extending in the longitudinal direction of the load carrier which is configured such that it can be fixed to the at least one crossbar 4 at different positions. More precisely, the supporting bars comprise positioning holes 13 provided equidistantly and configured to accommodate a fixation bolt 30 (see Figs. 3 and 4) for fixing the supporting bar to the adjacent cross bar 4 or another suitable structure of the load carrier, the side bars 2 for instance. Note that the fixation bolt 30 as shown in Figs. 3 and 4 is engaged with a nut 32 provided in a T-groove on the lower side of the crossbar 4. It is also possible that the supporting portion forms a side wall which at least partially limits a loading area of the load carrier. With the latter construction as shown in Figs. 8 and 9, the overall configuration is adaptable to the dimensions of the goods to be transported.

## Claims

1. Load carrier (1) for a vehicle, for instance load carrier basket, comprising at least one crossbar (4) which in a mounted state of the load carrier (1) extends in cross direction of the vehicle, and a load stop (10) wherein the load stop (10) is provided on a front end of the load carrier in the longitudinal direction of the load carrier and comprises at least one supporting portion (12) for coupling the load stop (10) to the load carrier (1), and a stop member (20) with an abutment portion (26), wherein the stop member (20) is held on the at least one supporting portion (12) by means of a coupling mechanism (14) in such a manner that the stop member (20) is movable between a use position in which the abutment portion (26) is provided such that the goods to be transported on the load carrier (1) can get in contact with the abutment portion (26), and a non-use position in which the goods to be transported cannot get in contact with the abutment portion (26), wherein the stop member (20) comprises a supporting surface which, when the stop member (20) is in the non-use position, acts in a supporting plane defined by an uppermost portion of the at least one crossbar (4) for additionally supporting the goods to be transported on the load carrier (1) and/or wherein the stop member (20) does not provide a stop function when the same is in the non-use position and comprises a supporting function which is available when the same is in the non-use position.

2. Load carrier according to claim 1, wherein the supporting surface is a flat surface, which is arranged substantially parallel to the supporting plane when the stop member (20) is in the non-use position.

3. Load carrier according to claim 1 or 2, wherein the abutment portion (26) comprises an abutment surface, preferably a flat surface, which is oriented substantially perpendicular to and in cross direction of the load carrier (1), when the stop member (20) is in the use position, wherein the abutment surface preferably has a height (h) of 50 to 150mm, preferably 75 to 100mm, most preferably 85 mm.

4. Load carrier (1) according to one of the preceding claims, wherein the stop member (20) comprises an aerodynamically formed portion (21) which is configured such that the air resistance of the stop member (20) is reduced in the use position and the non-use position and wherein the stop member (20) is preferably configured and arranged such that the aerodynamically formed portion (21) does not protrude into a loading area of the load carrier (1).

5. Load carrier (1) according to claim 4, wherein the aerodynamically formed portion (21) comprises a first area (22) and second area (24), wherein both areas (22, 24) preferably comprise flat surfaces which are arranged at an angle with respect to each other, preferably at an angle of 45°.

6. Load carrier (1) according to one of the preceding claims, wherein the coupling mechanism (14) is configured to pivotably support the stop member (20), wherein preferably a pivot axis (28) about which the stop member (20) is pivotable is provided substantially perpendicular to a longitudinal extension direction of the supporting portion (12).

7. Load carrier (1) according to claim 6, wherein the coupling mechanism (14) comprises a restriction member (34) which is configured to limit a pivoting movement of the stop member (20) between the use position and the non-use position.

8. Load carrier (1) according to claim 7, wherein the stop member (20) comprises a first contact portion (25) and a second contact portion (27) wherein the restriction member (34) is arranged such that the first contact portion (25) is in contact with the restriction member (34) when the stop member (20) is in the non-use position and that the second contact portion (27) is in contact with the restriction member (34) when the stop member (20) is in the use position.

9. Load carrier (1) according to one of the preceding claims, wherein the abutment member (20) is configured to receive a load which can be applied onto the stop member (20) by means of the goods to be transported, for example an impact load which can be applied on the stop member (20) in particular when loading the load carrier (1) or as a result of a movement of the goods to be transported due to a deceleration of the vehicle.

10. Load carrier (1) according to one of the preceding claims, wherein the stop member (20) is formed from extruded aluminum and comprises a reinforcement structure, for example a reinforcement wall (23) which extends from the abutment portion (26) in a substantially perpendicular direction thereto.

11. Load carrier (1) according to one of the preceding claims, wherein the coupling mechanism (14) comprises a locking mechanism (15) which is able to lock the stop member (20) in the use position and/or the non-use position and which preferably allows a tool-free transition of the stop member (20) from the use position to the non-use position.

12. Load carrier (1) according to claim 11, wherein the locking mechanism (15) comprises a locking portion (18) which is fixed to the stop member (20) or integrally formed with the stop member (20), and an urging member (16) which is configured such that it applies a force on the locking portion (18) in such a manner that the stop member (20) is urged towards the use position or the non-use position.

13. Load carrier (1) according to claim 12, wherein the urging member (16) is provided on the supporting portion (12) and comprises an elastic portion (17), preferably made of sheet metal, which is continuously in contact with the locking portion (18) wherein the locking portion (18) and the elastic portion (17) are arranged such that the elastic portion (17) is deformed upon movement of the stop member (20) from the use position to the non-use position by means of the urging member (16) in such a manner that the force applied from the urging member (16) onto the locking portion (18) first rises to a maximum value and then decreases.

14. Load carrier (1) according to one of the preceding claims, wherein the position of the load stop (10) with respect to the crossbar (4) is adjustable in the longitudinal direction of the load carrier (1), for example from 0 up to and including 500 mm.

15. Load carrier (1) according to claim 14, wherein the supporting portion (12) is a supporting bar extending in the longitudinal direction of the load carrier (1), which is configured such that it can be fixed to the at least one crossbar (4) at different positions, preferably equidistant positions, wherein the supporting bar preferably comprises equidistant openings (13) in which a fixation bolt for fixation to the crossbar (4) can be inserted, or wherein the supporting portion is a side wall preferably at least partially limiting a loading area of the load carrier.

## Patentansprüche

1. Lastenträger (1) für ein Fahrzeug, zum Beispiel Lastenträgerkorb, der mindestens eine Querstange (4), die in einem montierten Zustand des Lastenträgers (1) in der Querrichtung des Fahrzeugs verläuft, sowie einen Lastenanschlag (10) umfasst, wobei der Lastenanschlag (10) an einem vorderen Ende des Lastenträgers in der Längsrichtung des Lastenträgers vorgesehen ist und mindestens einen Halteabschnitt (12) zum Verbinden des Lastenanschlags (10) mit dem Lastenträger (1) sowie ein Anschlagelement (20) mit einem Anlageabschnitt (26) umfasst, wobei das Anschlagelement (20) an dem mindestens einen Halteabschnitt (12) über einen Verbindungsmechanismus (14) derart gehalten ist, dass das Anschlagelement (20) zwischen einer Gebrauchsstellung, in der der Anlageabschnitt (26) derart vorgesehen ist, dass die auf dem Lastenträger (1) zu transportierenden Güter mit dem Anlageabschnitt (26) in Berührung kommen können, und einer Nichtgebrauchsstellung bewegbar ist, in der die zu transportierenden Güter mit dem Anlageabschnitt (26) nicht in Berührung kommen können, wobei das Anschlagelement (20) eine Haltefläche umfasst, die, wenn sich das Anschlagelement (20) in der Nichtgebrauchsstellung befindet, in einer Halteebene, die von einem am weitesten oben liegenden Abschnitt der mindestens einen Querstange (4) definiert ist, zum zusätzlichen Halten der auf dem Lastenträger (1) zu transportierenden Güter wirksam ist, und/oder wobei das Anschlagelement (20) nicht für eine Anschlagfunktion sorgt, wenn sich dieses in der Nichtgebrauchsstellung befindet, und eine Haltefunktion umfasst, die verfügbar ist, wenn sich dieses in der Nichtgebrauchsstellung befindet.

2. Lastenträger nach Anspruch 1, wobei die Haltefläche eine ebene Fläche ist, die im Wesentlichen parallel zur Halteebene angeordnet ist, wenn sich das Anschlagelement (20) in der Nichtgebrauchsstellung befindet.

3. Lastenträger nach Anspruch 1 oder 2, wobei der Anlageabschnitt (26) eine Anlagefläche, vorzugsweise eine ebene Fläche, umfasst, die im Wesentlichen senkrecht zu und in Querrichtung zu dem Lastenträger (1) ausgerichtet ist, wenn sich das Anschlagelement (20) in der Gebrauchsstellung befindet, wobei die Anlagefläche vorzugsweise eine Höhe (h) von 50 bis 150 mm, vorzugsweise 75 bis 100 mm, am bevorzugtesten 85 mm aufweist.

4. Lastenträger (1) nach einem der vorhergehenden Ansprüche, wobei das Anschlagelement (20) einen aerodynamisch geformten Abschnitt (21) umfasst, der so eingerichtet ist, dass der Luftwiderstand des Anschlagelements (20) in der Gebrauchsstellung und der Nichtgebrauchsstellung vermindert ist, und wobei das Anschlagelement (20) vorzugsweise so eingerichtet und angeordnet ist, dass der aerodynamisch geformte Abschnitt (21) nicht in einen Beladebereich des Lastenträgers (1) ragt.

5. Lastenträger (1) nach Anspruch 4, wobei der aerodynamisch geformte Abschnitt (21) einen ersten Bereich (22) und zweiten Bereich (24) umfasst, wobei beide Bereiche (22, 24) vorzugsweise ebene Flächen umfassen, die unter einem Winkel, vorzugsweise einem Winkel von 45°, zueinander angeordnet sind.

6. Lastenträger (1) nach einem der vorhergehenden Ansprüche, wobei der Verbindungsmechanismus (14) so eingerichtet ist, dass er das Anschlagelement (20) schwenkbar hält, wobei vorzugsweise eine Schwenkachse (28), um die herum das Anschlagelement (20) schwenkbar ist, im Wesentlichen senkrecht zu einer Längsverlaufsrichtung des Halteabschnitts (12) vorgesehen ist.

7. Lastenträger (1) nach Anspruch 6, wobei der Verbindungsmechanismus (14) ein Einschränkungselement (34) umfasst, das so eingerichtet ist, dass es eine Schwenkbewegung des Anschlagelements (20) zwischen der Gebrauchsstellung und der Nichtgebrauchsstellung begrenzt.

8. Lastenträger (1) nach Anspruch 7, wobei das Anschlagelement (20) einen ersten Kontaktabschnitt (25) und einen zweiten Kontaktabschnitt (27) umfasst, wobei das Einschränkungselement (34) so angeordnet ist, dass der erste Kontaktabschnitt (25) das Einschränkungselement (34) berührt, wenn sich das Anschlagelement (20) in der Nichtgebrauchsstellung befindet, und dass der zweite Kontaktabschnitt (27) das Einschränkungselement (34) berührt, wenn sich das Anschlagelement (20) in der Gebrauchsstellung befindet.

9. Lastenträger (1) nach einem der vorhergehenden Ansprüche, wobei das Anlageelement (20) so eingerichtet ist, dass es eine Belastung aufnimmt, die auf das Anschlagelement (20) über die zu transportierenden Güter ausgeübt werden kann, beispielsweise eine Stoßbelastung, die auf das Anschlagelement (20) ausgeübt werden kann, insbesondere beim Beladen des Lastenträgers (1) oder infolge einer Bewegung der zu transportierenden Güter aufgrund einer Geschwindigkeitsverringerung des Fahrzeugs.

10. Lastenträger (1) nach einem der vorhergehenden Ansprüche, wobei das Anschlagelement (20) aus stranggepresstem Aluminium geformt ist und eine Verstärkungskonstruktion umfasst, beispielsweise eine Verstärkungswand (23), die von dem Anlageabschnitt (26) aus in einer im Wesentlichen senkrechten Richtung dazu verläuft.

11. Lastenträger (1) nach einem der vorhergehenden Ansprüche, wobei der Verbindungsmechanismus (14) einen Arretiermechanismus (15) umfasst, der in der Lage ist, das Anschlagelement (20) in der Gebrauchsstellung und/oder der Nichtgebrauchsstellung zu arretieren und der vorzugsweise einen werkzeugfreien Übergang des Anschlagelements (20) aus der Gebrauchsstellung in die Nichtgebrauchsstellung ermöglicht.

12. Lastenträger (1) nach Anspruch 11, wobei der Arretiermechanismus (15) einen Arretierabschnitt (18), der am Anschlagelement (20) befestigt oder mit dem Anschlagelement (20) einteilig ausgebildet ist, sowie ein Druckelement (16) umfasst, das so eingerichtet ist, dass es derart eine Kraft auf den Arretierabschnitt (18) ausübt, dass das Anschlagelement (20) in Richtung der Gebrauchsstellung oder der Nichtgebrauchsstellung gedrückt wird.

13. Lastenträger (1) nach Anspruch 12, wobei das Druckelement (16) an dem Halteabschnitt (12) vorgesehen ist und einen vorzugsweise aus Blech gefertigten elastischen Abschnitt (17) umfasst, der den Arretierabschnitt (18) kontinuierlich berührt, wobei der Arretierabschnitt (18) und der elastische Abschnitt (17) derart angeordnet sind, dass der elastische Abschnitt (17) bei der Bewegung des Anschlagelements (20) aus der Gebrauchsstellung in die Nichtgebrauchsstellung über das Druckelement (16) derart verformt wird, dass die von dem Druckelement (16) auf den Arretierabschnitt (18) ausgeübte Kraft zuerst auf einen Höchstwert ansteigt und dann abnimmt.

14. Lastenträger (1) nach einem der vorhergehenden Ansprüche, wobei die Position des Lastenträgers (10) bezogen auf die Querstange (4) in der Längsrichtung des Lastenträgers (1) einstellbar ist, beispielsweise von 0 bis zu und einschließlich 500 mm.

15. Lastenträger (1) nach Anspruch 14, wobei der Halteabschnitt (12) eine in der Längsrichtung des Lastenträgers (1) verlaufende Haltestange ist, die so eingerichtet ist, dass sie an der mindestens einen Querstange (4) an verschiedenen Positionen, vorzugsweise im selben Abstand zueinander befindlichen Positionen, befestigt werden kann, wobei die Haltestange vorzugsweise im selben Abstand zueinander angeordnete Öffnungen (13) umfasst, in die eine Fixierschraube zur Befestigung an der Querstange (4) gesteckt werden kann, oder wobei der Halteabschnitt eine Seitenwand ist, die vorzugsweise zumindest teilweise einen Beladebereich des Lastenträgers begrenzt.

## Revendications

1. Support de charge (1) pour véhicule, par exemple galerie support de charge, comprenant au moins une barre transversale (4) qui, lorsque le support de charge (1) est monté, s'étend dans la direction transversale du véhicule, et un organe de blocage de charge (10), l'organe de blocage de charge (10) étant prévu sur une extrémité avant du support de charge dans la direction longitudinale du support de charge et comprenant au moins une partie de support (12) pour coupler l'organe de blocage de charge (10) au support de charge (1) et un élément de blocage (20) doté d'une partie de butée (26), l'élément de blocage (20) étant maintenu sur l'au moins une partie de support (12) au moyen d'un mécanisme de couplage (14) de telle manière que l'élément de blocage (20) est mobile entre une position d'utilisation, dans laquelle la partie de butée (26) est prévue de façon que les biens à transporter sur le support de charge (1) peuvent venir en contact avec la partie de butée (26), et une position de non-utilisation, dans laquelle les biens à transporter ne peuvent pas venir en contact avec la partie de butée (26), l'élément de blocage (20) comprenant une surface de support qui, quand l'élément de blocage (20) est dans la position de non-utilisation, agit dans un plan de support défini par une partie la plus haute de l'au moins une barre transversale (4) afin d'apporter un support supplémentaire aux biens à transporter sur le support de charge (1), et/ou l'élément de blocage (20) n'assurant pas de fonction de blocage quand celui-ci est dans la position de non-utilisation et comprenant une fonction de support qui est disponible quand celui-ci est dans la position de non utilisation.

2. Support de charge selon la revendication 1, dans lequel la surface de support est une surface plane, qui est agencée de manière sensiblement parallèle au plan de support quand l'élément de blocage (20) est dans la position de non-utilisation.

3. Support de charge selon la revendication 1 ou 2, dans lequel la partie de butée (26) comprend une surface de butée, de préférence une surface plane, qui est orientée de manière sensiblement perpendiculaire au support de charge (1) et dans la direction transversale de celui-ci, quand l'élément de blocage (20) est dans la position d'utilisation, la surface de butée présentant de préférence une hauteur (h) de 50 à 150 mm, de préférence de 75 à 100 mm, le plus préférablement de 85 mm.

4. Support de charge (1) selon l'une des revendications précédentes, dans lequel l'élément de blocage (20) comprend une partie formée de manière aérodynamique (21) qui est conçue de telle sorte que la résistance à l'air de l'élément de blocage (20) est réduite dans la position d'utilisation et la position de non-utilisation et dans lequel l'élément de blocage (20) est de préférence conçu et agencé de telle sorte que la partie formée de manière aérodynamique (21) ne dépasse pas dans une zone de chargement du support de charge (1).

5. Support de charge (1) selon la revendication 4, dans lequel la partie formée de manière aérodynamique (21) comprend une première zone (22) et une seconde zone (24), les deux zones (22, 24) comprenant de préférence des surfaces planes qui sont disposées selon un angle l'une par rapport à l'autre, de préférence selon un angle de 45°.

6. Support de charge (1) selon l'une des revendications précédentes, dans lequel le mécanisme de couplage (14) est conçu pour supporter de manière pivotante l'élément de blocage (20), un axe de pivotement (28) sur lequel l'élément de blocage (20) est pivotant étant de préférence prévu de manière sensiblement perpendiculaire à une direction d'extension longitudinale de la partie de support (12).

7. Support de charge (1) selon la revendication 6, dans lequel le mécanisme de couplage (14) comprend un élément de restriction (34) qui est conçu pour limiter un mouvement pivotant de l'élément de blocage (20) entre la position d'utilisation et la position de non-utilisation.

8. Support de charge (1) selon la revendication 7, dans lequel l'élément de blocage (20) comprend une première partie de contact (25) et une seconde partie de contact (27), l'élément de restriction (34) étant agencé de telle sorte que la première partie de contact (25) est en contact avec l'élément de restriction (34) quand l'élément de blocage (20) est dans la position de non-utilisation et que la seconde partie de contact (27) est en contact avec l'élément de restriction (34) quand l'élément de blocage (20) est dans la position d'utilisation.

9. Support de charge (1) selon l'une des revendications précédentes, dans lequel l'élément de butée (20) est conçu pour recevoir une charge qui peut être appliquée sur l'élément de blocage (20) par les biens à transporter, par exemple une charge d'impact qui peut être appliquée sur l'élément de blocage (20) en particulier lors du chargement du support de charge (1) ou à la suite d'un mouvement des biens à transporter en raison d'une décélération du véhicule.

10. Support de charge (1) selon l'une des revendications précédentes, dans lequel l'élément de blocage (20) est formé à partir d'aluminium extrudé et comprend une structure de renforcement, par exemple une paroi de renforcement (23) qui s'étend depuis la partie de butée (26) dans une direction sensiblement perpendiculaire à celle-ci.

11. Support de charge (1) selon l'une des revendications précédentes, dans lequel le mécanisme de couplage (14) comprend un mécanisme de verrouillage (15) qui est susceptible de verrouiller l'élément de blocage (20) dans la position d'utilisation et/ou la position de non-utilisation et qui permet de préférence de transférer l'élément de blocage (20) de la position d'utilisation à la position de non-utilisation sans outil.

12. Support de charge (1) selon la revendication 11, dans lequel le mécanisme de verrouillage (15) comprend une partie de verrouillage (18) qui est fixée à l'élément de blocage (20) ou formée d'un seul tenant avec l'élément de blocage (20), et un élément de poussée (16) qui est conçu de telle sorte qu'il exerce une force sur la partie de verrouillage (18) de telle manière que l'élément de blocage (20) est poussé vers la position d'utilisation ou la position de non-utilisation.

13. Support de charge (1) selon la revendication 12, dans lequel l'élément de poussée (16) est prévu sur la partie de support (12) et comprend une partie élastique (17), de préférence fabriquée en tôle métallique, qui est en contact continu avec la partie de verrouillage (18), la partie de verrouillage (18) et la partie élastique (17) étant agencées de telle sorte que la partie élastique (17) est déformée lors du déplacement de l'élément de blocage (20) de la position d'utilisation à la position de non-utilisation au moyen de l'élément de poussée (16) de telle manière que la force exercée par l'élément de poussée (16) sur la partie de verrouillage (18) s'élève d'abord jusqu'à une valeur maximale puis diminue.

14. Support de charge (1) selon l'une des revendications précédentes, dans lequel la position de l'organe de blocage de charge (10) par rapport à la barre transversale (4) est réglable dans la direction longitudinale du support de charge (1), par exemple de 0 à 500 mm inclus.

15. Support de charge (1) selon la revendication 14, dans lequel la partie de support (12) est une barre de support s'étendant dans la direction longitudinale du support de charge (1), qui est conçue de telle sorte qu'elle peut être fixée à l'au moins une barre transversale (4) dans différentes positions, de préférence des positions équidistantes, la barre de support comprenant de préférence des ouvertures équidistantes (13) dans lesquelles un boulon de fixation pour la fixation à la barre transversale (4) peut être inséré, ou la partie de support étant une paroi latérale limitant de préférence au moins partiellement une zone de chargement du support de charge.
